# EUROPEAN PATENT APPLICATION

(11) **EP 4 679 591 A1**
(43) Date of publication of application: **14.01.2026**
(21) Application number: 24222798.1
(22) Date of filing: 23.12.2024
(51) Int. Cl.: H01M 50/209, H01M 50/507, H01M 50/588, H01M 50/593, H01M 50/516

(54) **BATTERY MODULE**

(30) Priority: 11.07.2024 KR 20240091743
(71) Applicant: SAMSUNG SDI CO., LTD., Yongin-si, Gyeonggi-do 17084 (KR)
(72) Inventor: KIM, Myung Chul, 16678 Suwon-si (KR)
(74) Representative: Marks & Clerk LLP

(57) **Abstract**

A battery module includes a housing body, a plurality of battery cells disposed in the housing body and including terminal parts, a busbar connected to the terminal parts to electrically connect the plurality of battery cells, a busbar holder between the busbar and the plurality of battery cells, the busbar holder supporting the busbar, an insulating part between adjacent battery cells of the plurality of battery cells to insulate the adjacent battery cells from each other, and a penetration prevention part which prevents foreign matter from being introduced between the plurality of battery cells.

## Description

### BACKGROUND

### 1. Field

Embodiments relate to a battery module.

### 2. Description of the Related Art

In general, secondary batteries are capable of charging and discharging unlike primary batteries that cannot be charged. Low-capacity secondary batteries are used in small portable electronic devices such as smartphones, feature phones, notebook computers, digital cameras, and camcorders, and large-capacity secondary batteries are widely used as power sources for driving motors of hybrid vehicles, electric vehicles, and the like and as batteries for power storage. Such a secondary battery includes an electrode assembly formed with a positive electrode and a negative electrode, a case for accommodating the electrode assembly, an electrode terminal connected to the electrode assembly, and the like.

Secondary batteries are widely used for driving not only small devices such as portable electronic devices but also medium and large devices such as electric vehicles and energy storage systems (ESSs) or used as energy storage devices therefore. In particular, in the case of medium and large devices, one battery module in which a plurality of battery cells are electrically connected to each other to improve output power and capacity is provided.

In a process of manufacturing a battery module, busbars are used to electrically connect the battery cells, and a welding process is used to bond the busbars and electrodes of the battery cells. Foreign matter generated in the welding process is considered as a factor that degrades stability of the battery cells.

The above information disclosed in this Background section is provided for enhancement of understanding of the background of the present disclosure, and, therefore, it may contain information that does not constitute related or prior art.

### SUMMARY

The purpose of the present invention is directed to providing a battery module which is safe from foreign matter generated in a welding process.

In addition, the purpose of the present invention is directed to providing a battery module with a decreased possibility of fire.

Embodiments include a battery module including a housing body, a plurality of battery cells disposed in the housing body and including terminal parts, a busbar connected to the terminal parts to electrically connect the plurality of battery cells, a busbar holder between the busbar and the plurality of battery cells, the busbar holder supporting the busbar, an insulating part between adjacent battery cells of the plurality of battery cells to insulate the adjacent battery cells from each other, and a penetration prevention part which prevents foreign matter from being introduced between the plurality of battery cells.

The penetration prevention part may include a first penetration prevention holder which extends from the busbar holder toward a space between the adjacent battery cells and a distance from the first penetration prevention holder to the plurality of battery cells is less than a separation distance between the adjacent battery cells.

A width of the first penetration prevention holder may be greater than the separation distance.

The penetration prevention part may include a first penetration prevention holder insertion piece extending from the first penetration prevention holder and inserted between the adjacent battery cells.

The first penetration prevention holder may include a plurality of first penetration prevention holder pieces extending from the busbar holder toward the adjacent battery cells.

A distance between a first penetration prevention holder piece of the plurality of first penetration prevention holder pieces and a battery cell of the plurality of battery cells is maintained to be less than the separation distance.

The plurality of first penetration prevention holder pieces may be in contact with the adjacent battery cells.

The penetration prevention part may include second penetration prevention holders extending toward the terminal parts of each of the plurality of battery cells.

Each of the plurality of battery cells may include terminal fixing parts disposed outside the terminal parts, and a distance between the second penetration prevention holders and the terminal fixing parts is less than the separation distance between the adjacent battery cells.

A lower surface of each of the second penetration prevention holders may be at a lower level than an upper portion of the terminal fixing parts.

The penetration prevention part may include a penetration prevention cover in contact with the adjacent battery cells to cover a gap between the adjacent battery cells.

The penetration prevention cover may extend toward the busbar holder.

The penetration prevention cover may be in contact with the busbar holder.

The penetration prevention part may include a penetration prevention insulating part extending from the insulating part toward the busbar holder and protruding from a gap between the adjacent battery cells.

Each of the plurality of battery cells may include a case and a cap plate disposed to cover the case, and the penetration prevention insulating part may include a penetration prevention insulating inclined part which is inclined with respect to at least one of the case and the cap plate.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a schematic perspective view illustrating a configuration of a battery module according to one or more embodiments of the present disclosure;
FIG. 2 is an exploded schematic perspective view illustrating the configuration of the battery module according to one or more embodiments of the present disclosure;
FIG. 3 is a schematic perspective view illustrating a configuration of a battery cell according to one or more embodiments of the present disclosure;
FIG. 4 is a schematic cross-sectional view illustrating the configuration of the battery cell according to one or more embodiments of the present disclosure;
FIG. 5 is a plan view illustrating a portion of the battery module according to one or more embodiments of the present disclosure;
FIG. 6 is a side view illustrating a battery cell to which a penetration prevention part is applied according to one or more embodiments of the present disclosure;
FIG. 7 is a cross-sectional view illustrating the penetration prevention part according to one or more embodiments of the present disclosure;
FIG. 8 is a cross-sectional view illustrating the penetration prevention part according to one or more embodiments of the present disclosure;
FIG. 9 is a cross-sectional view illustrating the penetration prevention part according to one or more embodiments of the present disclosure;
FIG. 10 is a cross-sectional view illustrating the penetration prevention part according to one or more embodiments of the present disclosure;
FIG. 11 is a cross-sectional view illustrating the penetration prevention part according to one or more embodiments of the present disclosure;
FIG. 12 is a side view illustrating a battery cell to which a penetration prevention part is applied according to one or more embodiments of the present disclosure;
FIG. 13 is a cross-sectional view illustrating the penetration prevention part according to one or more embodiments of the present disclosure;
FIG. 14 is a cross-sectional view illustrating the penetration prevention part according to one or more embodiments of the present disclosure;
FIG. 15 is a side view illustrating a battery cell to which a penetration prevention part is applied according to one or more embodiments of the present disclosure;
FIG. 16 is a cross-sectional view illustrating the penetration prevention part according to one or more embodiments of the present disclosure; and
FIG. 17 is a cross-sectional view illustrating the penetration prevention part according to one or more embodiments of the present disclosure;

### DETAILED DESCRIPTION

Example embodiments will now be described more fully hereinafter with reference to the accompanying drawings; however, the present invention may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that if an element or layer is referred to as being "on," "connected to," or "coupled to" another element or layer, it may be directly on, connected, or coupled to the other element or layer or one or more intervening elements or layers may also be present. If an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. If phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element or feature as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented e.g., rotated 90 degrees or at other orientations, and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between and including the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

If an arbitrary element is referred to as being disposed or located or positioned on the "above or below" or "on or under" a component, it may mean that the arbitrary element is placed in contact with the upper or lower surface of the component and may also mean that another component may be interposed between the component and any arbitrary element disposed or located or positioned on or under the component.

In addition, it is to be understood that if an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, if a part is referred to as being "electrically coupled" to another part, the part may be directly electrically connected to another part or one or more intervening parts may be present therebetween such that the part and the another part are indirectly electrically connected to each other.

Throughout the specification, if "A and/or B" is stated, it means A, B, or A and B, unless otherwise stated. That is, "and/or" includes any or all combinations of a plurality of items enumerated. If "C to D" is stated, it means C or more and D or less, unless otherwise specified.

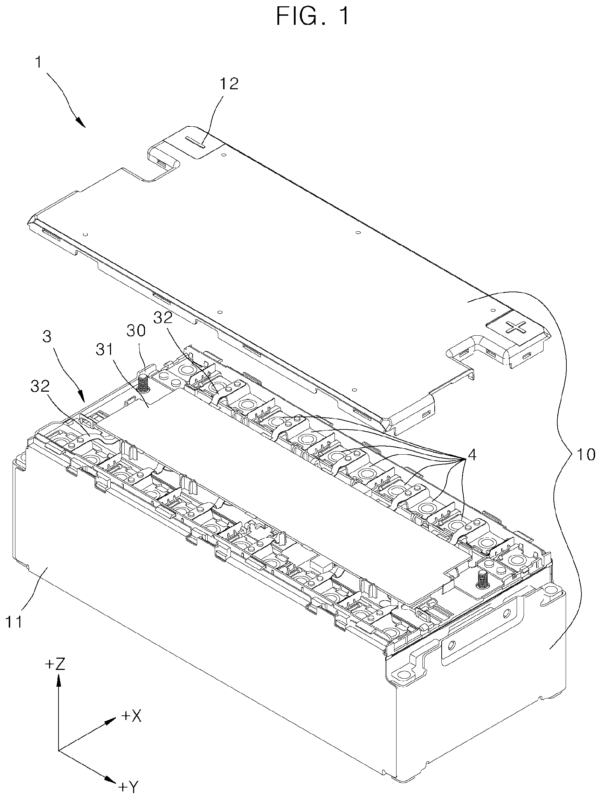

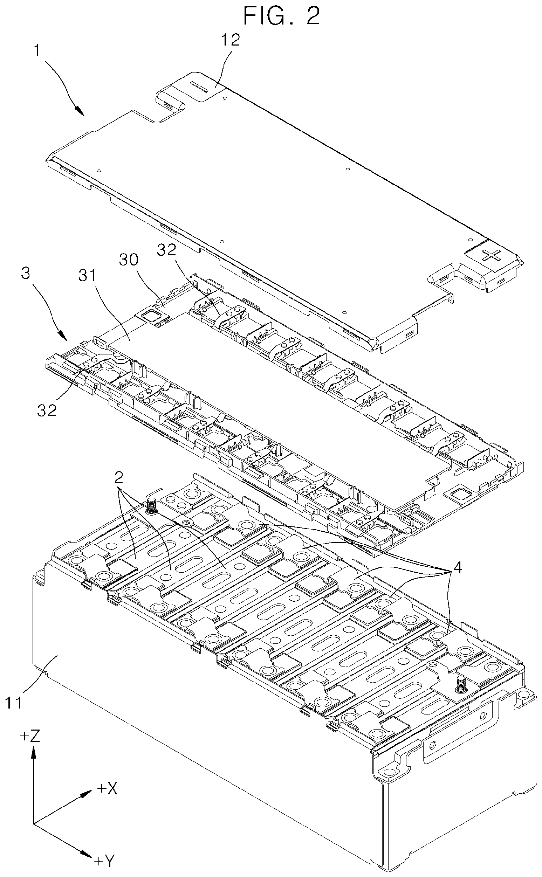

FIG. 1 is a schematic perspective view illustrating a configuration of a battery module according to one or more embodiments of the present disclosure, and FIG. 2 is an exploded schematic perspective view illustrating the configuration of the battery module according to one or more embodiments of the present disclosure.

Referring to FIGS. 1 and 2, a battery module 1 according to the present embodiment includes a housing 10, battery cells 2, and a module part 3.

The housing 10 may include a housing body 11 and a housing cover 12.

The housing body 11 may form an overall exterior of the battery module 1 and support both the battery cells 2 and the module part 3 which will be described below

The housing body 11 according to the present embodiment may have a hollow box shape with an open upper side (see FIG. 1). A design of a cross-sectional shape of the housing body 11 may be variously changed according to the number and shapes of the battery cells 2 other than the quadrangular shape illustrated in FIG. 1.

The housing cover 12 which opens or closes an internal space of the housing body 11 may be disposed at an open side of the housing body 11. The housing cover 12 according to the present embodiment may be formed in a flat plate shape disposed to face an upper surface of the housing body 11. The housing cover 12 may be coupled to the housing body 11 by one of various coupling methods such as a welding method and a bolting method.

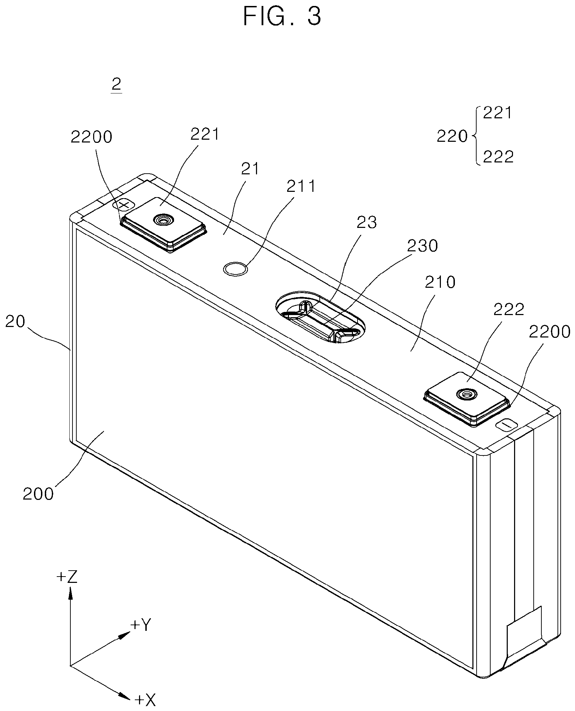

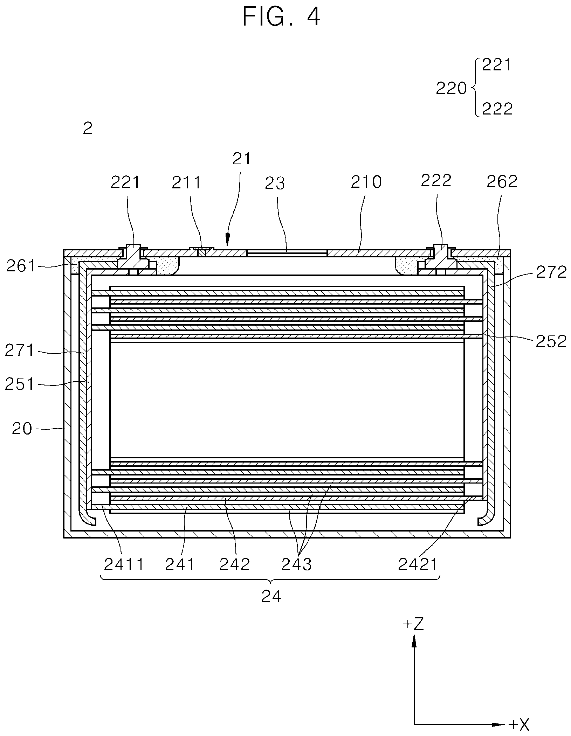

The battery cells 2 may function as a unit structure for storing and supplying power in the battery module. The battery cell 2 will be described below with the description of FIGS. 3 and 4.

The module part 3 may include a module body 30, a module substrate 31, and module sensing parts 32.

The module body 30 may have an approximate plate shape. The module substrate 31 may be disposed on the module body 30. According to one or more embodiments, the module substrate 31 may be disposed on the module body 30. The module substrate 31 may be electrically connected to the module sensing parts 32. Each of the module sensing parts 32 may detect a temperature, a voltage, a current, etc., of the battery cell 2, and detected information may be transmitted to the module substrate 31. The module sensing parts 32 may be connected to busbars 4 or the battery cells 2.

FIG. 3 is a schematic perspective view illustrating a configuration of the battery cell according to one or more embodiments of the present disclosure, and FIG. 4 is a schematic cross-sectional view illustrating the configuration of the battery cell according to one or more embodiments of the present disclosure.

Referring to FIGS. 3 and 4, the battery cell 2 may include at least one electrode assembly 24 in which a positive electrode 241 and a negative electrode 242 are wound with a separator 243, which is an insulator, interposed therebetween, a case 20 in which the electrode assembly 24 is accommodated, and a cap assembly 21 coupled to an opening of the case 20.

Hereinafter, an example of the battery cell 2, which is a lithium-ion secondary battery having a prismatic shape, will be described. However, the present disclosure is not limited thereto, and the battery cell 2 may be a lithium polymer battery or cylindrical battery.

The electrode assembly 24 may have a shape in which the positive electrode 241 and the negative electrode 242 are wound with the separator 243, which is an insulator, interposed therebetween. However, the present disclosure is not limited thereto, and the electrode assembly 24 may have a structure in which a positive electrode 241 and a negative electrode 242 in a plurality of sheets are alternately stacked with a separator 243 interposed therebetween.

The positive electrode 241 and the negative electrode 242 may include coating portions which are regions in which current collectors formed of thin metal plate foils are coated with active materials and non-coating portions 2411 and 2421 which are regions in which the current collectors are not coated with active materials.

The case 20 may form an overall exterior of the battery cell 2 and provide a space in which the electrode assembly 24 is accommodated. The case 20 according to the present embodiment may have a hollow rectangular hexahedron with one open side (e.g., an open top side as oriented in FIGS. 3 and 4). The case 20 may be formed of a conductive metal such as aluminum, an aluminum alloy, or steel plated with nickel.

An insulating part 200 may be disposed outside the case 20. The insulating part 200 may be disposed outside the case 20 such that the adjacent battery cells 2 are not in contact with and are spaced apart from each other. In one or more embodiments, the insulating part 200 may be attached to the case 20. The insulating part 200 may include an insulating material such as rubber or a resin.

The cap assembly 21 may be coupled to the case 20 and may seal the case 20.

The cap assembly 21 according to the present embodiment may include a cap plate 210 which covers the opening of the case 20. The cap plate 210 may be formed of a conductive material. A positive terminal 221 and a negative terminal 222 may be electrically connected to the positive electrode 241 and the negative electrode 242 may pass through the cap plate 210 and protrude outward.

Terminal parts 220 may be disposed to protrude outward from the cap plate 210. The terminal parts 220 may include the positive terminal 221 and the negative terminal 222. Upper outer circumferential surfaces of the positive terminal 221 and the negative terminal 222 may be screw-machined and fixed to the cap plate 210 using nuts.

However, the present disclosure is not limited thereto, and the positive terminal 221 and the negative terminal 222 may be formed as rivet structures and rivet-coupled or welding-coupled to the cap plate 210.

Terminal fixing parts 2200 may be disposed outside the terminal parts 220. The terminal fixing parts 2200 may be disposed outside the terminal parts 220 and may be in fixed contact with the terminal parts 220.

An electrolyte injection port 211 on which a sealing lid is installed may be formed in the cap plate 210.

When an internal pressure of the case 20 increases, a bent portion 23 in which a notch 230 for performing an opening operation may be in the cap plate 210.

The positive terminal 221 and the negative terminal 222 may be electrically connected to a first current collector 251 and a second current collector 252 bonded to a positive electrode non-coating portion 2411 and a negative electrode non-coating portion 2421.

For example, the positive terminal 221 and the negative terminal 222 may be coupled to the first current collector 251 and the second current collector 252 through a welding process. However, the present disclosure is not limited thereto, and the positive terminal 221 and the negative terminal 222 may be integrally coupled to the positive terminal 221 and the negative terminal 222.

Insulating members may be installed between the electrode assembly 24 and the cap plate 210. In this case, the insulating members may include a first insulating member 261 and a second insulating member 262, and each of the first insulating member 261 and the second insulating member 262 may be installed between the electrode assembly 24 and the cap plate 210.

According to the present embodiment, separation members may be installed to face one side surface of the electrode assembly 24, and one end of each separation member may be installed between the insulating members, and the positive terminal 221 and the negative terminal 222. In this case, the separation members may include a first separation member 271 and a second separation member 272.

One end of each of the first separation member 271 and the second separation member 272, which may be installed to face one side surface of the electrode assembly 24, may be installed between the first insulating member 261 and the second insulating member 262 and between the positive terminal 221 and the negative terminal 222.

The positive terminal 221 and the negative terminal 222 may be, for example, welding-coupled to the first current collector 251 and the second current collector 252 and may be coupled to one end of each of the first insulating member 261, the second insulating member 262, the first separation member 271, and the second separation member 272.

The battery cell 2 may be in the housing body 11. The battery cell 2 according to the present embodiment may be disposed in the housing body 11 such that the cap plate 210 faces the housing cover 12.

The battery cell 2 may be provided as a plurality of battery cells 2. The plurality of battery cells 2 may be disposed in parallel in the housing body 11. As an example, the plurality of battery cells 2 may be disposed in a direction parallel to a Y-axis based on FIG. 1. The number of the battery cells 2 is not limited to that illustrated in FIGS. 1 and 2, and the design may be variously changed according to a size of the battery module 1, etc.

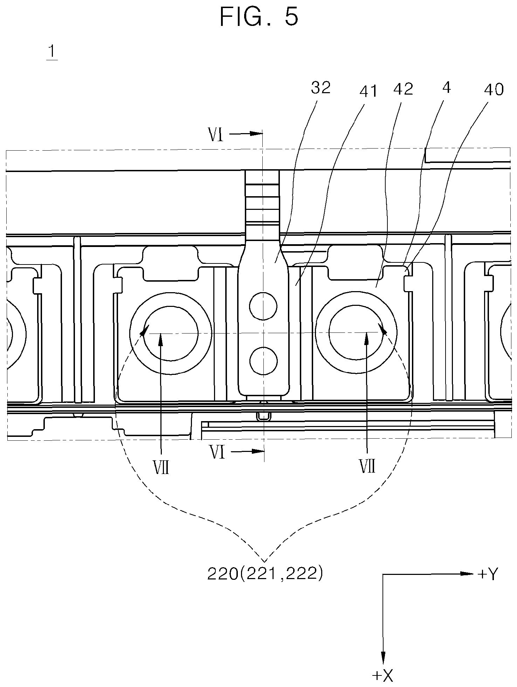

FIG. 5 is a plan view illustrating a portion of the battery module according to one or more embodiments of the present disclosure.

The battery module 1, the terminal parts 220, the positive terminal 221, the negative terminal 222, the module sensing part 32, and the busbar 4 illustrated in FIG. 5 are the same as the battery module 1, the terminal part 220, the positive terminal 221, the negative terminal 222, the module sensing part 32, and the busbar 4 illustrated in FIGS. 1 to 4. Accordingly, descriptions of the same components may be omitted.

The busbar 4 may electrically connect the terminal parts 220. In one or more embodiments, the busbar 4 may connect the positive terminal 221 and the positive terminal 221, or the negative terminal 222 and the negative terminal 222 to connect the battery cells 2 in parallel. Alternatively, the busbar 4 may connect the positive terminal 221 and the negative terminal 222 to connect the battery cells 2 in series.

The busbar 4 may include a busbar body 40, a busbar sensing contact part 41, and busbar terminal contact parts 42.

The busbar body 40 may include a conductor to electrically connect the battery cells 2. The busbar sensing contact part 41 and the busbar terminal contact parts 42 may be in the busbar body 40.

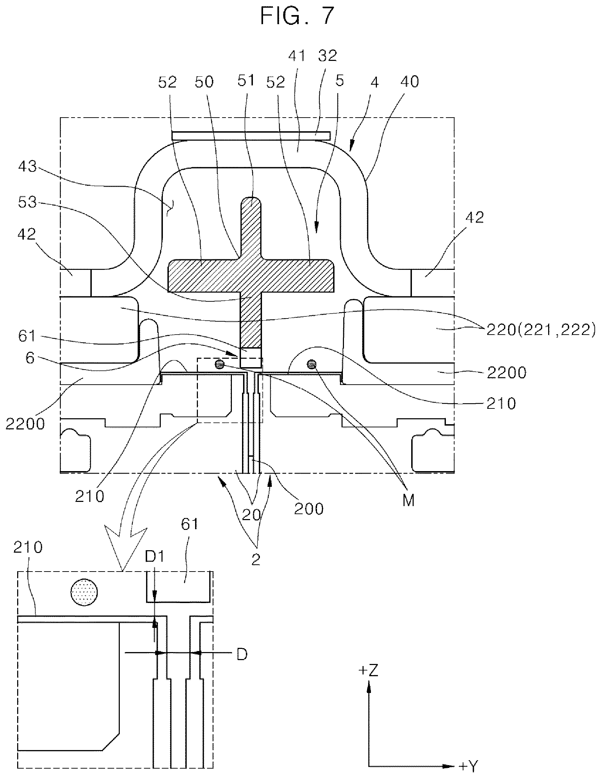

The busbar sensing contact part 41 may be in contact with the module sensing part 32, and the busbar terminal contact parts 42 may be in contact with the terminal parts 220 including the positive terminal 221 and/or the negative terminal 222. A shape of the busbar body 40 will be described below with the description of FIG. 7.

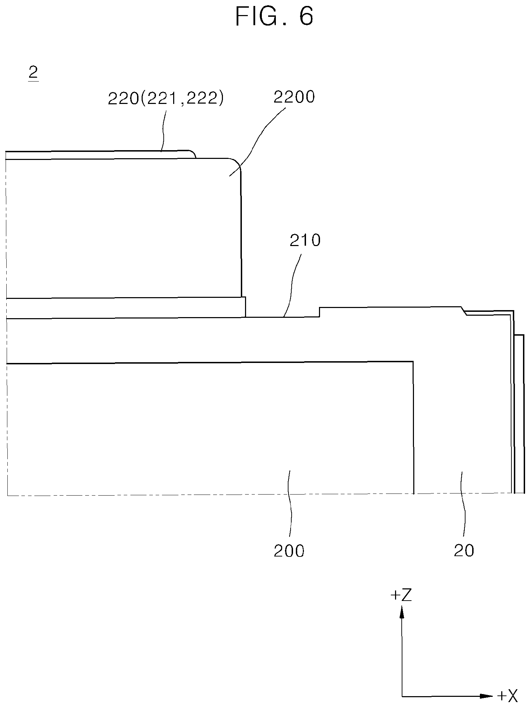

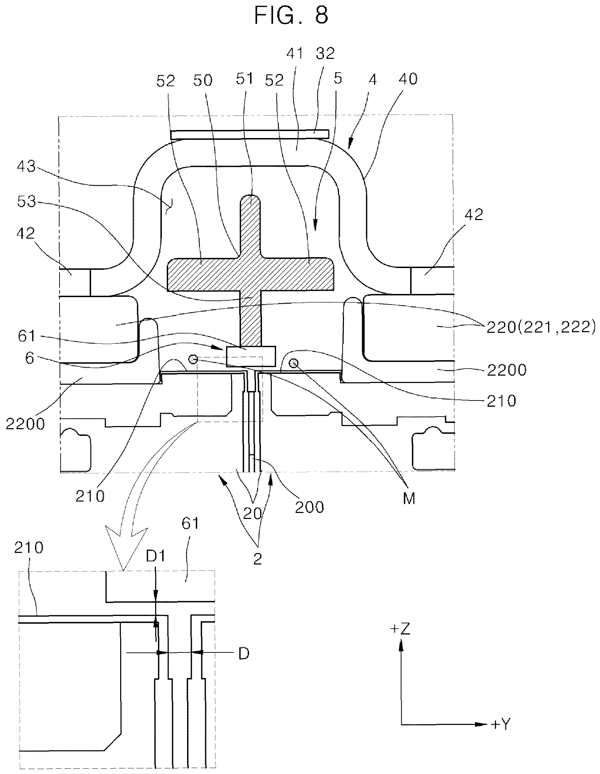

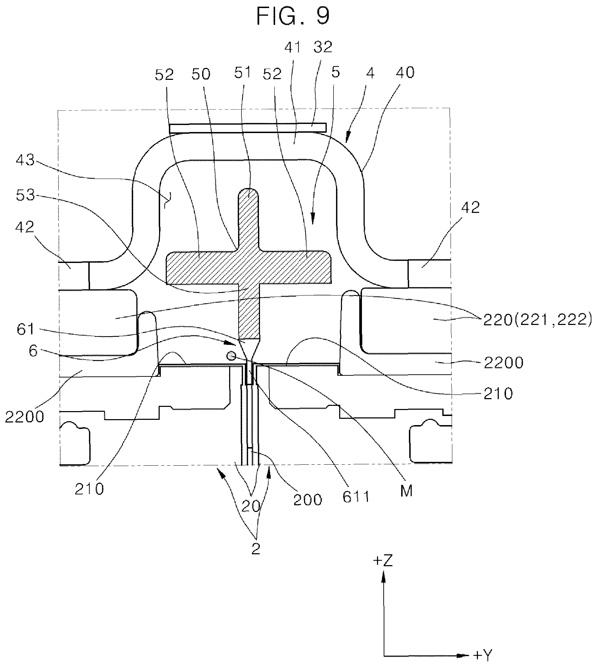

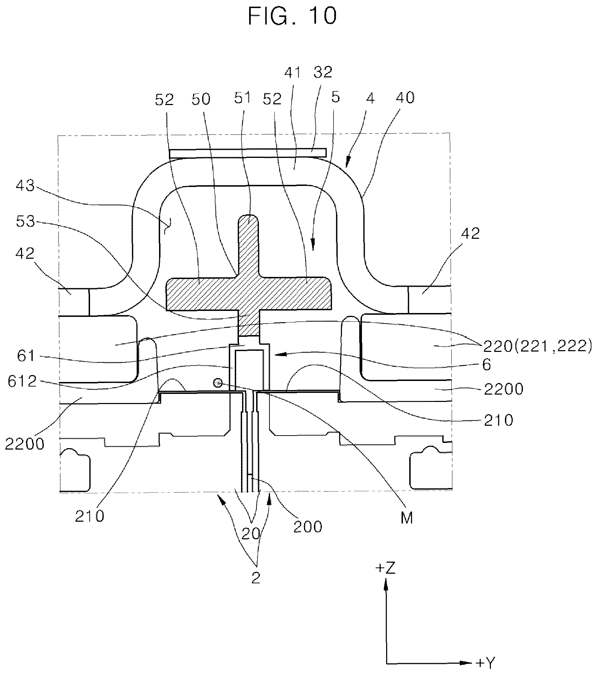

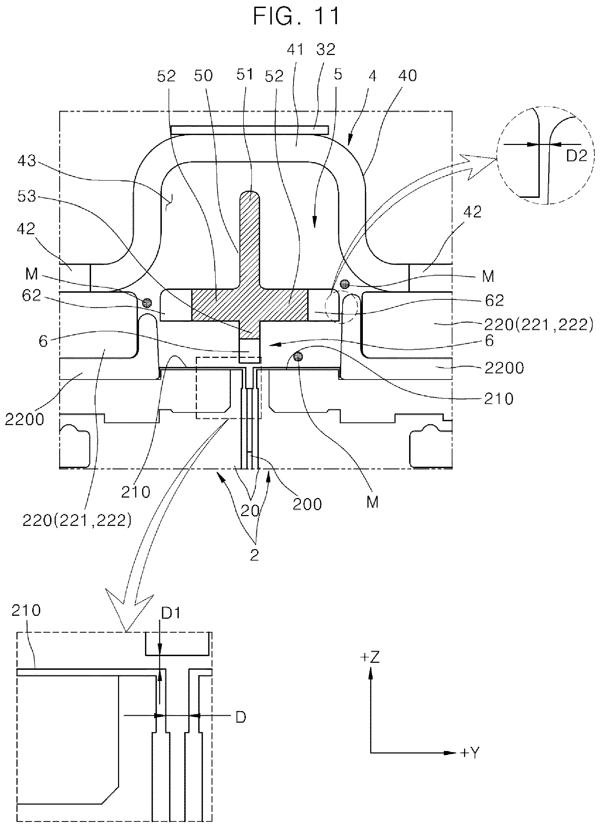

FIG. 6 is a side view illustrating a battery cell to which a penetration prevention part is applied according to one or more embodiments of the present disclosure, and FIG. 7 is a cross-sectional view illustrating the penetration prevention part according to one or more embodiments of the present disclosure. FIG. 8 is a cross-sectional view illustrating the penetration prevention part according to one or more embodiments of the present disclosure, and FIG. 9 is a cross-sectional view illustrating the penetration prevention part according to one or more embodiments of the present disclosure. FIG. 10 is a cross-sectional view illustrating the penetration prevention part according to one or more embodiments of the present disclosure, and FIG. 11 is a cross-sectional view illustrating the penetration prevention part according to one or more embodiments of the present disclosure.

Battery cells 2, cases 20, an insulating part 200, a cap plate 210, terminal parts 220, a positive terminal 221, a negative terminal 222, terminal fixing parts 2200, busbars 4, a busbar body 40, a busbar sensing contact part 41, and busbar terminal contact parts 42 which are illustrated in FIGS. 6 to 11 are the same as the battery cells 2, the cases 20, the insulating part 200, the cap plate 210, the terminal parts 220, the positive terminal 221, the negative terminal 222, the terminal fixing parts 2200, the busbars 4, the busbar body 40, the busbar sensing contact part 41, and the busbar terminal contact parts 42 illustrated in FIGS. 1 to 5. Accordingly, descriptions of the same components may be omitted.

Referring to FIGS. 6 to 11, the insulating part 200 may be disposed in the case 20 of the battery cell 2. According to one embodiment, an upper end portion (for example, in a +Z-axis direction) of the insulating part 200 may be disposed under (for example, in a -Z-axis direction from) the cap plate 210 of the battery cell 2.

The terminal parts 220 including the positive terminal 221 and/or the negative terminal 222 may be disposed over (for example, in the +Z-axis direction from) the cap plate 210.

The terminal fixing parts 2200 may be disposed outside the terminal parts 220. The terminal fixing parts 2200 may be in fixed contact with the terminal parts 220 to fix the terminal parts 220. In one or more embodiments, the terminal fixing part 2200 may include an insulator. For example, the terminal fixing part 2200 may be a resin.

The busbar 4 may include the busbar body 40, the busbar sensing contact part 41, the busbar terminal contact parts 42, and a busbar concave portion 43.

The busbar body 40 may include a conductive material, for example, including a metal. The busbar body 40 may electrically connect the terminal parts 220 to connect the battery cells 2 in series and/or parallel.

The busbar sensing contact part 41 may be disposed in the busbar body 40. The busbar sensing contact part 41 may be connected to a module sensing part 32 of a module part 3. The module sensing part 32 may be coupled to the busbar sensing contact part 41 through, for example, a welding process. In one or more embodiments, the module sensing part 32 may be welding-coupled to the busbar sensing contact part 41 using, for example, a laser.

The busbar terminal contact parts 42 may be disposed in the busbar body 40. The busbar terminal contact parts 42 may be connected to the terminal parts 220 of the battery cells 2. The busbar terminal contact parts 42 may be coupled to the terminal parts 220 through, for example, a welding process. In one or more embodiments, the busbar terminal contact parts 42 may be welding-coupled to the terminal parts 220 using, for example, a laser.

Foreign matter M may be generated while the module sensing part 32 is welding-coupled to the busbar sensing contact part 41 and the terminal parts 220 are welding-coupled to the busbar terminal contact parts 42. The foreign matter M may include spatter generated in the welding process and may include a material introduced from the outside of a battery module 1 in a process of manufacturing the battery module 1. The foreign matter M may be in contact with the case 20 of the battery cell 2.

The foreign matter M may include a conductive material including a metal. The foreign matter M may be between the cases 20 of the adjacent battery cells 2. The adjacent battery cells 2 may be spaced a separation distance D from each other. When the foreign matter M is disposed between the cases 20 of the adjacent battery cells 2, a current may flow between the adjacent battery cells 2 through the foreign matter M, and thus a short circuit, may occur between the battery cells. If the short circuit does occur between the battery cells 2, since the performance of the battery module 1 may be degraded or a fire may occur in the battery module 1, it is necessary to prevent the foreign matter M from connecting the adjacent battery cells 2. A penetration prevention part 6, which will be described below, may prevent the occurrence of the short circuit due to the foreign matter M within the battery module 1. The penetration prevention part 6 may prevent the foreign matter M from approaching a gap between the adjacent battery cells 2.

The busbar body 40 may be provided in a "C" shape. As the busbar body 40 is provided in the "C" shape, the busbar concave portion 43 may be provided in the busbar body 40. The busbar concave portion 43 may be formed to be concave upward (for example, in the +Z-axis direction) from under (for example, in the -Z-axis direction from) the busbar body 40.

A busbar holder 5 may be disposed in the busbar concave portion 43. The busbar holder 5 may be in contact with the busbar 4 and may support the busbar 4, and thus the busbar 4 may be fixed to the busbar holder 5. The busbar holder 5 may include an insulator. In one or more embodiments, the busbar holder 5 may include a synthetic resin such as a plastic.

The busbar holder 5 may include a busbar holder body 50, a busbar holder supporting part 51, busbar holder pieces 52, and a busbar holder protruding portion 53.

A cross-sectional shape of the busbar holder body 50 may be provided in substantially a "+" shape. The busbar holder supporting part 51 may be disposed over (for example, in the +Z-axis direction from) the busbar holder body 50. The busbar holder supporting part 51 may extend from the busbar holder body 50 to protrude upward. Although it is illustrated in FIG. 7 that the busbar holder supporting part 51 and the busbar 4 are not in contact with each other, the busbar holder supporting part 51 may be disposed in contact with the busbar 4.

The busbar holder pieces 52 may be beside (for example, in a Y-axis direction from) the busbar holder body 50. The busbar holder pieces 52 may extend from the busbar holder body 50 and protrude toward both sides of the busbar holder body 50. Although it is illustrated in FIG. 7 that the busbar holder pieces 52 are not in contact with the busbar 4, the terminal parts 220, and/or the terminal fixing parts 2200, the busbar holder pieces 52 may be in contact with the busbar 4, the terminal parts 220, and/or the terminal fixing parts 2200.

The busbar holder protruding portion 53 may be disposed under (for example, in the -Z-axis direction from) the busbar holder body 50. The busbar holder protruding portion 53 may extend from the busbar holder body 50 to protrude downward from the busbar holder body 50. Although it is illustrated in FIG. 7 that the busbar holder protruding portion 53 is not in contact with the battery cells 2, embodiment(s) of the present disclosure may include an example in which a busbar holder protruding portion 53 is in contact with the battery cells 2.

The penetration prevention part 6 may prevent the foreign matter M from being disposed between the adjacent battery cells 2.

The penetration prevention part 6 may be implemented in one of various shapes.

In FIGS. 7 to 11, the penetration prevention part 6 may be implemented as a portion of the busbar holder 5.

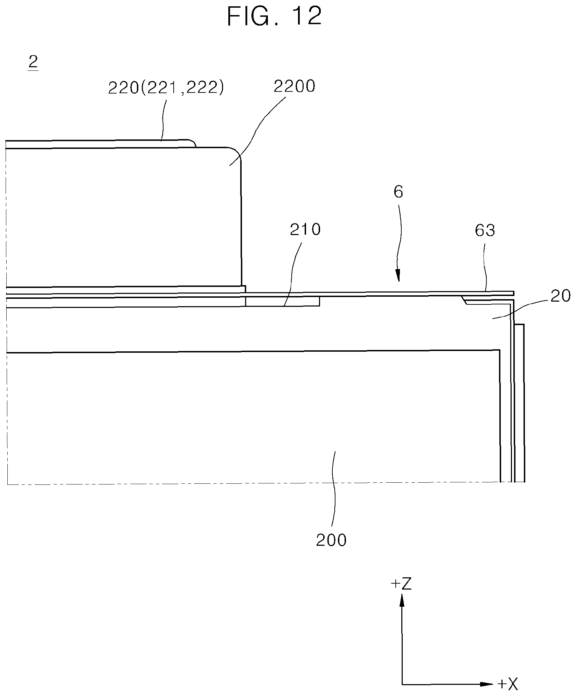

In FIGS. 12 to 14, a penetration prevention part 6 may be provided as a penetration prevention cover 63 disposed over (for example, in a +Z-axis direction from) cases 20 and/or cap plates 210 of battery cells 2. An embodiment in which the penetration prevention part 6 is implemented as the penetration prevention cover 63 will be described with description of FIGS. 12 to 14.

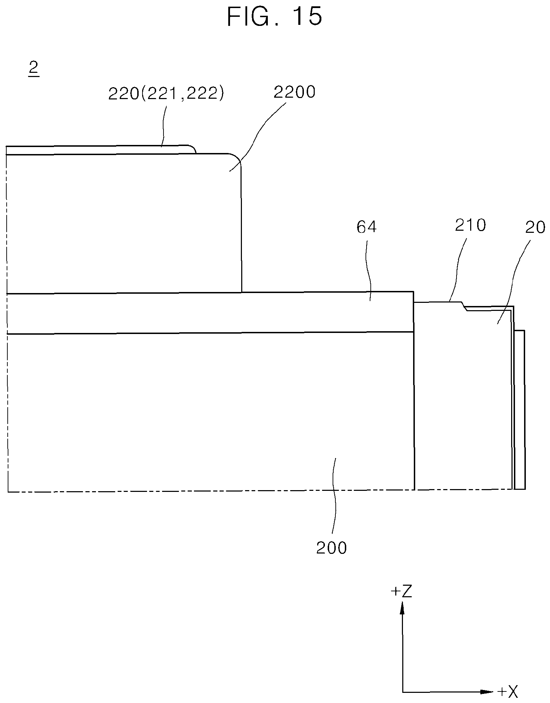

In FIGS. 15 to 17, a penetration prevention part 6 may be a portion of an insulating part 200 disposed between adjacent battery cells 2. One or more embodiments in which the penetration prevention part 6 is implemented as the portion of the insulating part 200 will be described with description of FIGS. 15 to 17.

Referring to FIG. 7, the penetration prevention part 6 may include a first penetration prevention holder 61. The first penetration prevention holder 61 may extend from the busbar holder 5. In one or more embodiments, the first penetration prevention holder 61 may extend from the busbar holder protruding portion 53. The first penetration prevention holder 61 may extend from the busbar holder protruding portion 53 toward the gap between the adjacent battery cells 2 (for example, in the -Z-axis direction). The first penetration prevention holder 61 may be integrally formed with the busbar holder protruding portion 53. Alternatively, the first penetration prevention holder 61 may be provided as a separate component bonded to the busbar holder protruding portion 53. Accordingly, the busbar holder protruding portion 53 may function as the first penetration prevention holder 61.

A first distance D1 between the first penetration prevention holder 61 and the battery cell 2 may be smaller than the separation distance D. In one or more embodiments, the first distance D1 between the first penetration prevention holder 61 and the cap plate 210 may be smaller than the separation distance D. In FIG. 7, the distances D and D1 do not include the arrow heads.

A width of the first penetration prevention holder 61 (for example, in the Y-axis direction) may be greater than the separation distance D. Accordingly, the foreign matter M may be prevented from approaching the gap between the adjacent battery cells 2.

Since a size of the foreign matter M is smaller than the first distance D1, even when the foreign matter M is disposed in the gap between the adjacent battery cells 2, the size of the foreign matter M is much smaller than the separation distance D, and thus it may be difficult for the foreign matter M to come in contact with both of the adjacent battery cells 2 at the same time.

Accordingly, a short circuit in the battery module 1 may be prevented.

Referring to FIG. 8, a width of a first penetration prevention holder 61 (for example, in the Y-axis direction) may be greater than a width of the busbar holder protruding portion 53 (for example, in the Y-axis direction). Accordingly, the foreign matter M may be further prevented from being introduced between the adjacent battery cells 2.

Although it is illustrated in FIGS. 7 and 8 that the first penetration prevention holder 61 is separated from the battery cell 2, the first penetration prevention holder 61 may be disposed in contact with the battery cell 2. In one or more embodiments, the first penetration prevention holder 61 may be disposed in contact with the case 20 and/or the cap plate 210.

Referring to FIG. 9, a first penetration prevention holder 61 may include a first penetration prevention holder insertion piece 611 inserted between the adjacent battery cells 2. A width of the first penetration prevention holder insertion piece 611 (for example, in the Y-axis direction) may be smaller than a width of the busbar holder protruding portion 53 (for example, in the Y-axis direction) or smaller than the separation distance D. As the first penetration prevention holder insertion piece 611 is inserted between the adjacent battery cells 2, the foreign matter M may be prevented from being introduced between the adjacent battery cells 2. Accordingly, performance degradation and inflammation of the battery module 1 can be prevented.

Referring to FIG. 10, a first penetration prevention holder 61 may include a plurality of first penetration prevention holder pieces 612. The first penetration prevention holder pieces 612 may extend from the busbar holder protruding portion 53 to be spaced apart from each other. The first penetration prevention holder pieces 612 may be disposed over (for example, in the +Z-axis direction from) the adjacent battery cells 2.

As the gap between the adjacent battery cells 2 is disposed between the plurality of first penetration prevention holder pieces 612, the foreign matter M may be prevented from being disposed between the adjacent battery cells 2.

Although it is illustrated in FIG. 10 that the first penetration prevention holder pieces 612 are in contact with the battery cells 2, the present disclosure includes an embodiment in which first penetration prevention holder pieces 612 are spaced apart from battery cells 2. In one or more embodiments, first penetration prevention holder pieces 612 may be spaced a smaller distance than the separation distance D from the battery cell 2.

Referring to FIG. 11, the penetration prevention part 6 may include second penetration prevention holders 62. The second penetration prevention holders 62 may extend from the busbar holder 5. In one or more embodiments, the second penetration prevention holders 62 may extend from the busbar holder pieces 52. The second penetration prevention holders 62 may extend from the busbar holder pieces 52 toward the terminal parts 220 and/or the terminal fixing parts 2200 (for example, in the Y-axis direction). The second penetration prevention holders 62 may be integrally formed with the busbar holder pieces 52. Alternatively, the second penetration prevention holders 62 may be provided as separate components bonded to the busbar holder pieces 52. Accordingly, the busbar holder pieces 52 may function as the second penetration prevention holders 62.

A second distance D2 between the second penetration prevention holder 62 and the terminal part 220 and/or the terminal fixing part 2200 may be smaller than the separation distance D. In one or more embodiments, the second distance D2 between the second penetration prevention holder 62 and the terminal part 220 and/or the terminal fixing part 2200 may be smaller than the separation distance D.

Since a size of the foreign matter M is smaller than the first distance D1, even when the foreign matter M is disposed in the gap between the adjacent battery cells 2, the size of the foreign matter M is much smaller than the separation distance D, and thus it may be difficult for the foreign matter M to come in contact with both of the adjacent battery cells 2 at the same time.

Accordingly, a short circuit of the battery module 1 can be prevented.

Although the first penetration prevention holder 61, the first penetration prevention holder insertion piece 611 (see FIG. 9), the first penetration prevention holder piece 612 (see FIG. 10), and the second penetration prevention holder 62 illustrated in FIGS. 7 to 11 are illustrated in different drawings, the present disclosure includes an embodiment(s) in which two or more among the first penetration prevention holder 61, the first penetration prevention holder insertion piece 611, the first penetration prevention holder piece 612, and the second penetration prevention holder 62 are applied.

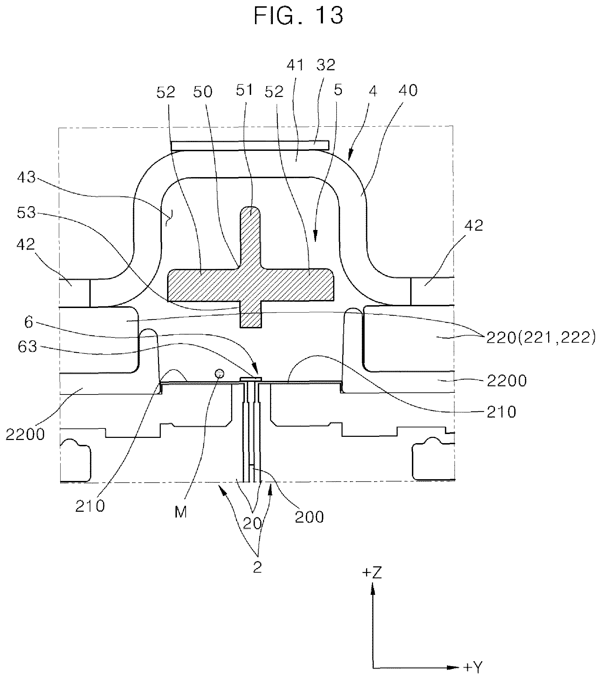

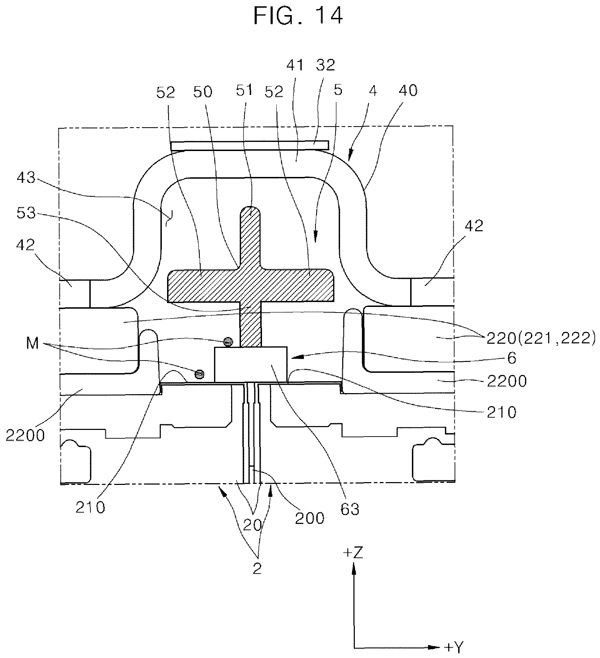

FIG. 12 is a side view illustrating a battery cell to which a penetration prevention part is applied according to one or more embodiments of the present disclosure, FIG. 13 is a cross-sectional view illustrating the penetration prevention part according to one or more embodiments of the present disclosure, and FIG. 14 is a cross-sectional view illustrating the penetration prevention part according to one or more embodiments of the present disclosure.

Battery cells 2, cases 20, insulating parts 200, a cap plate 210, terminal parts 220, a positive terminal 221, a negative terminal 222, terminal fixing parts 2200, busbars 4, a busbar body 40, a busbar sensing contact part 41, busbar terminal contact parts 42, a busbar holder 5, a busbar holder body 50, a busbar holder supporting part 51, busbar holder pieces 52, and a busbar holder protruding portion 53 illustrated in FIGS. 12 to 14 are the same as the battery cells 2, the cases 20, the insulating parts 200, the cap plate 210, the terminal parts 220, the positive terminal 221, the negative terminal 222, the terminal fixing parts 2200, the busbar 4, the busbar body 40, the busbar sensing contact part 41, the busbar terminal contact parts 42, the busbar holder 5, the busbar holder body 50, the busbar holder supporting part 51, the busbar holder pieces 52, and the busbar holder protruding portion 53 illustrated in FIGS. 1 to 11. Accordingly, descriptions of the same components may be omitted.

Referring to FIGS. 12 to 14, a penetration prevention part 6 may be disposed over (for example, in the +Z-axis direction from) the battery cell 2. In one or more embodiments, a penetration prevention cover 63 may be disposed on the case 20 and/or the cap plate 210. A width of the penetration prevention cover 63 (for example, in a Y-axis direction) may be greater than a separation distance D between the adjacent battery cells 2. As described above, a gap between the battery cells 2 is covered by the penetration prevention cover 63, and foreign matter M may be prevented from being introduced into the gap between the battery cells 2.

Referring to FIG. 14, the penetration prevention cover 63 may be provided in a substantially hexahedron. The penetration prevention cover 63 may extend upward (for example, in the +Z-axis direction). The penetration prevention cover 63 may be in contact with the busbar holder 5.

The penetration prevention cover 63 may be provided as an insulator and/or an elastic body. In one or more embodiments, the penetration prevention cover 63 may be provided as rubber. The penetration prevention cover 63 may be in contact with the busbar holder 5 to support the busbar holder 5.

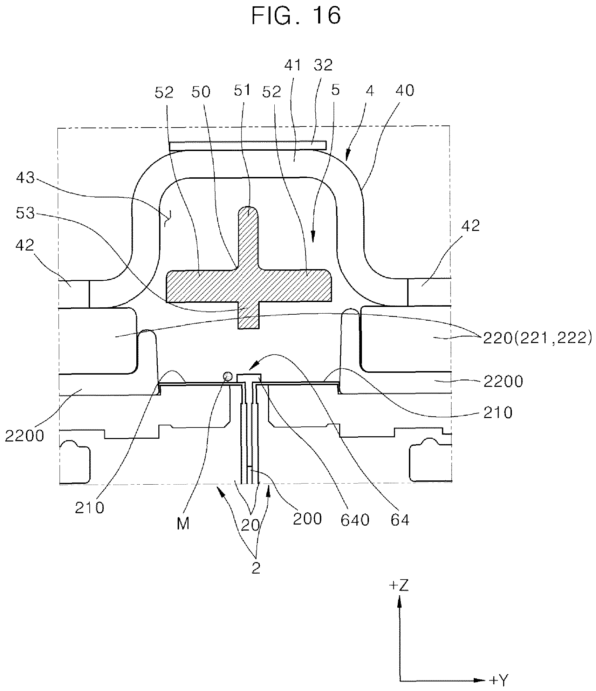

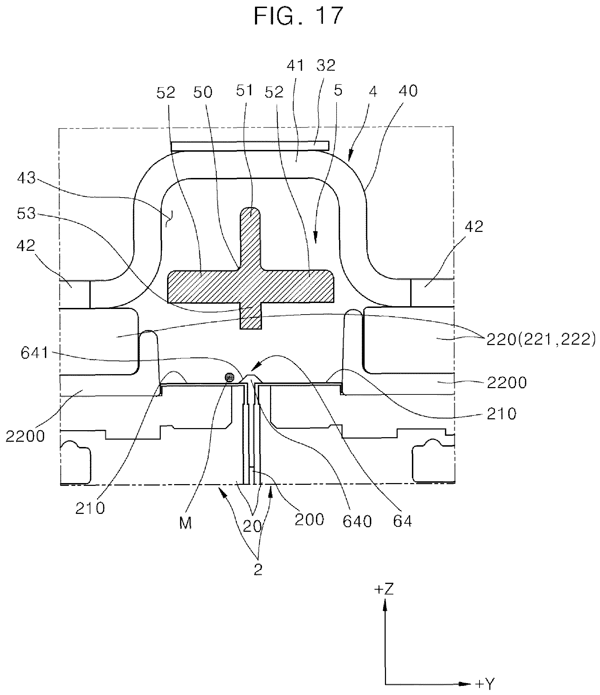

FIG. 15 is a side view illustrating a battery cell to which a penetration prevention part is applied according to one or more embodiments of the present disclosure, FIG. 16 is a cross-sectional view illustrating the penetration prevention part according to one or more embodiments of the present disclosure, and FIG. 17 is a cross-sectional view illustrating the penetration prevention part according to one or more embodiments of the present disclosure.

Battery cells 2, cases 20, a cap plate 210, terminal parts 220, a positive terminal 221, a negative terminal 222, terminal fixing parts 2200, busbars 4, a busbar body 40, a busbar sensing contact part 41, busbar terminal contact parts 42, a busbar holder 5, a busbar holder body 50, a busbar holder supporting part 51, busbar holder pieces 52, and a busbar holder protruding portion 53 illustrated in FIGS. 15 to 17 are the same as the battery cells 2, the cases 20, the cap plate 210, the terminal parts 220, the positive terminal 221, the negative terminal 222, the terminal fixing parts 2200, the busbars 4, the busbar body 40, the busbar sensing contact part 41, the busbar terminal contact parts 42, the busbar holder 5, the busbar holder body 50, the busbar holder supporting part 51, the busbar holder pieces 52, and the busbar holder protruding portion 53 illustrated in FIGS. 1 to 14. Accordingly, descriptions of the same components may be omitted.

Referring to FIGS. 15 to 17, an insulating part 200 may be disposed between the cases 20 of the battery cells 2. A penetration prevention part 6 may include a penetration prevention insulating part 64. The penetration prevention insulating part 64 may extend from the insulating part 200. The penetration prevention insulating part 64 may be integrally formed with the insulating part 200. Alternatively, the penetration prevention insulating part 64 may be provided as a separate component bonded to the insulating part 200. Accordingly, the insulating part 200 may function as the penetration prevention insulating part 64.

An upper end portion of the penetration prevention insulating part 64 (for example, in a +Z-axis direction) may be disposed at the same level as the case 20 and/or the cap plate 210 of the battery cell 2 (for example, in a Z-axis direction) or at a higher level than the case 20 and/or the cap plate 210.

A gap between the adjacent battery cells 2 may be filled with the penetration prevention insulating part 64. Accordingly, foreign matter M may not be introduced between the adjacent battery cells 2.

The penetration prevention insulating part 64 may be disposed at the same level as the case 20 and/or the cap plate 210 or at a higher level than the case 20 and/or the cap plate 210. In one or more embodiments of the present disclosure, an upper end portion of the penetration prevention insulating part 64 (for example, in the +Z-axis direction) may protrude from the case 20 and/or the cap plate 210 by about 0.3 mm to 2 mm.

The penetration prevention insulating part 64 may include a penetration prevention insulating body 640 and a penetration prevention insulating inclined part 641.

The penetration prevention insulating inclined part 641 may be disposed on the penetration prevention insulating body 640. The penetration prevention insulating inclined part 641 may be inclined with respect to the case 20 and/or the cap plate 210. In one or more embodiments, the penetration prevention insulating inclined part 641 may extend in a direction intersecting the cap plate 210. Accordingly, the foreign matter M may be prevented from moving to the gap between the adjacent battery cells 2.

Accordingly, durability degradation of the battery module 1 can be prevented, and inflammation of the battery module 1 can be prevented.

In a battery module according to the present disclosure, a short circuit occurring between adjacent battery cells due to foreign matter can be prevented.

In addition, in the battery module according to the present disclosure, safety can be improved.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module, comprising:
a housing body;
a plurality of battery cells disposed in the housing body and including terminal parts;
a busbar connected to the terminal parts to electrically connect the plurality of battery cells;
a busbar holder between the busbar and the plurality of battery cells, the busbar holder supporting the busbar;
an insulating part between adjacent battery cells of the plurality of battery cells to insulate the adjacent battery cells from each other; and
a penetration prevention part which prevents foreign matter from being introduced between the plurality of battery cells.

2. The battery module as claimed in claim 1, wherein the penetration prevention part includes a first penetration prevention holder which extends from the busbar holder toward a space between the adjacent battery cells and a distance from the first penetration prevention holder to the plurality of battery cells is less than a separation distance between the adjacent battery cells.

3. The battery module as claimed in claim 2, wherein a width of the first penetration prevention holder is greater than the separation distance.

4. The battery module as claimed in claim 2 or 3, wherein the penetration prevention part includes a first penetration prevention holder insertion piece extending from the first penetration prevention holder and inserted between the adjacent battery cells.

5. The battery module as claimed in claim 2, 3 or 4, wherein the first penetration prevention holder includes a plurality of first penetration prevention holder pieces extending from the busbar holder toward the adjacent battery cells.

6. The battery module as claimed in claim 5, wherein a distance between a first penetration prevention holder piece of the plurality of first penetration prevention holder pieces and a battery cell of the plurality of battery cells is maintained to be less than the separation distance.

7. The battery module as claimed in claim 5 or 6, wherein the plurality of first penetration prevention holder pieces are in contact with the adjacent battery cells.

8. The battery module as claimed in any one of claims 2 to 7, wherein the penetration prevention part includes second penetration prevention holders extending toward the terminal parts of each of the plurality of battery cells.

9. The battery module as claimed in claim 8, wherein:
each of the plurality of battery cells includes terminal fixing parts disposed outside the terminal parts; and
a distance between the second penetration prevention holders and the terminal fixing parts is less than the separation distance between the adjacent battery cells.

10. The battery module as claimed in claim 9, wherein a lower surface of each of the second penetration prevention holders is at a lower level than an upper portion of the terminal fixing parts.

11. The battery module as claimed in any preceding claim, wherein the penetration prevention part includes a penetration prevention cover in contact with the adjacent battery cells to cover a gap between the adjacent battery cells.

12. The battery module as claimed in claim 11, wherein the penetration prevention cover extends toward the busbar holder.

13. The battery module as claimed in claim 12, wherein the penetration prevention cover is in contact with the busbar holder.

14. The battery module as claimed in any preceding claim, wherein the penetration prevention part includes a penetration prevention insulating part extending from the insulating part toward the busbar holder and protruding from a gap between the adjacent battery cells.

15. The battery module as claimed in claim 14, wherein:
each of the plurality of battery cells includes a case and a cap plate disposed to cover the case; and
the penetration prevention insulating part includes a penetration prevention insulating inclined part which is inclined with respect to at least one of the case and the cap plate.
